# EUROPÄISCHE PATENTSCHRIFT

(11) **EP 0 794 038 B1**
(45) Veröffentlichungstag und Bekanntmachung des Hinweises auf die Patenterteilung: **04.11.1998**
(21) Anmeldenummer: 96120970.7
(22) Anmeldetag: 28.12.1996
(51) Int. Cl.: B25F 5/00, B23Q 11/12, B25F 5/02, H02K 5/20, H02K 7/116, H02K 9/06, B25D 17/00

(54) **Handwerkzeug mit Anordnung zum Kühlen**
Hand tool with cooling arrangement
Outil à main avec un arrangement de refroidissement

(30) Priorität: 08.01.1996 DE 19600339; 08.01.1996 DE 29600191 U
(43) Veröffentlichungstag der Anmeldung: 10.09.1997
(73) Patentinhaber: Kress-elektrik GmbH + Co. Elektromotorenfabrik, D-72406 Bisingen (DE)
(72) Erfinder: Binder, Alfred, 72406 Bisingen (DE)
(74) Vertreter: Otte, Peter, Dipl.-Ing.

(56) Entgegenhaltungen:
- EP-A- 0 412 645
- WO-A-82/01966
- DE-A- 4 019 894
- DE-A- 4 238 564
- DE-B- 1 006 950
- US-A- 3 413 498
- US-A- 4 841 920
- US-A- 4 876 797
- US-A- 5 006 740

## Beschreibung

Die Erfindung betrifft ein Handwerkzeug mit einem Gehäuse, in dem ein Motor, ein diesem nachgeordnetes Getriebe und ein Lüftermittel angeordnet sind, wobei das Lüftermittel Kühlluft durch wenigstens eine Ansaugöffnung in dem Gehäuse ansaugt, über Motor und Getriebe leitet und über wenigstens eine Ausblasöffnung in dem Gehäuse wieder ausbläst.

Ein derartiges Handwerkzeug ist z.B. aus der US-A-5006740 bekannt.

Zur Kühlung von Handwerkzeugen, insbesondere Bohrhämmern und Schlagbohrmaschinen, ist es bekannt, Kühlluft über ein einseitig wirkendes Lüfterrad über den Motor anzusaugen. Die Luft wird dabei durch den je nach Arbeitseinsatz belasteten Motor vorgewärmt, wobei die Temperaturen der Kühlluft zwischen 40° C und 100° C variieren können. Diese Luft wird teilweise zur Getriebekühlung über Getriebeteile ausgeblasen.

Nachteilig bei dieser Art der Getriebekühlung ist es nun, daß die "Kühlluft" durch den betriebswarmen Motor erwärmt wird und hierdurch an dem Getriebe nur noch eine verminderte Kühlleistung erzielt wird.

Des weiteren ist es bekannt, Luft über ein großdimensioniertes Lüfterrad anzusaugen, welches in der Regel an einem Ende des Motors, d.h. an dem Ende der gesamten Anordnung aus Getriebe und Motor, positioniert ist. Auch in diesem Falle ist die Kühlleistung an dem Motor verringert, da die Kühlluft bereits durch das belastete und dadurch erwärmte Getriebe erwärmt wird und sich dadurch auch große Luftansaugwiderstände ergeben.

Um bei dieser Anordnung noch eine befriedigende Kühlleistung erzielen zu können, muß entweder der Lüfter sehr groß dimensioniert werden, damit noch ein entsprechender Saugkühlstrom erreicht wird, und/oder es muß der Motor so groß dimensioniert werden, daß durch den bei dieser Anordnung erzeugten Kühlstrom noch eine ausreichende Kühlung des Motors gewährleistet ist.

Ein weiterer Nachteil besteht darin, daß die Getriebeansaugöffnung meistens nahe des (Bohr)Werkzeugs angeordnet ist, so daß beim Betrieb des Handwerkzeugs entstehende Staubpartikel durch den ganzen Motor gesaugt werden und so den Motor beschädigen können.

Aufgabe der Erfindung ist es daher, ein Handwerkzeug der gattungsgemäßen Art derart zu verbessern, daß eine möglichst optimale Kühlung von Motor und Getriebe, insbesondere auch eine optimale Kühlung hochbelasteter Getriebekomponenten, erreicht wird.

Diese Aufgabe wird bei einem Handwerkzeug der eingangs beschriebenen Art erfindungsgemäß dadurch gelöst, daß das Lüftermittel wenigstens zwei Teillüftermittel umfaßt, die jeweils über getrennte Luftkanäle wenigstens den Motor und das Getriebe getrennt und unabhängig voneinander kühlen.

Die unabhängige und getrennt voneinander vorgenommene Kühlung von Motor und Getriebe durch die beiden Teillüftermittel hat den großen Vorteil, daß zwei getrennte Kühlluftströme jeweils für Motor und Getriebe vorhanden sind, so daß der Kühlluftstrom zur Kühlung des Motors nicht durch das erwärmte Getriebe erwärmt wird und umgekehrt der Kühlluftstrom zur Kühlung des Getriebes nicht durch den belasteten Motor erwärmt wird. Hierdurch wird eine optimale Kühlung des Motors und des Getriebes erreicht.

Grundsätzlich können die unterschiedlichsten Lüftermittel zum Einsatz kommen. Vorzugsweise ist bei der erfindungsgemäßen Lösung das Lüftermittel jedoch ein Doppellüfterrad, dessen beide Teillüftermittel jeweils ein dem Getriebe und dem Motor zugewandtes Lüfterrad sind. Hierdurch kann mit einem einzigen Bauteil auf einfache und damit kostengünstige Weise jeweils ein getrennter Kühlluftstrom für Motor und Getriebe erreicht werden.

Das Doppellüfterrad ist dabei vorteilhafterweise zwischen dem Motor und dem Getriebe angeordnet.

Vorteilhafterweise sind die Ansaug- und die Ausblasöffnungen voneinander getrennt. Hierdurch läßt sich eine vollständige Trennung der beiden Kühlkreisläufe jeweils für Motor und Getriebe erzielen, so daß es zu keinerlei unerwünschter "Vermischung" der beiden Kühlluftströme durch Turbulenzen u.dgl. und dadurch bei unterschiedlichen Betriebstemperaturen von Motor und Getriebe gegebenenfalls zu einer Erwärmung jeweils eines Kühlluftstromes durch den anderen kommen kann.

Insbesondere um eine besonders effektive Kühlung des Motors und des Getriebes zu erzielen, führt ein zur Motorkühlung vorgesehener erster Luftkanal direkt über den Motor und ein zur Getriebekühlung vorgesehener zweiter Luftkanal direkt über das Getriebe.

Dabei ist zur unmittelbaren Kühlung der Getriebelagerung der zweite Luftkanal vorteilhafterweise so angeordnet, daß der Kühlluftstrom an wenigstens einem die Lager aufnehmenden, gut wärmeleitenden, vorzugsweise aus Metall bestehenden Aufnahmeflansch vorbeigeführt wird und auf wenigstens ein Lager der Getriebewelle gerichtet ist.

Grundsätzlich könnte auf Trennwände zwischen dem ersten und dem zweiten Luftkanal im Gehäuse verzichtet werden, da die beiden Kühlluftströme durch das Doppellüfterrad an sich schon getrennt in dem Gehäuse geführt werden. Um eine besonders effektive Kühlung von Motor und Getriebe zu erzielen ist es aber von Vorteil, die beiden Kühlkreisläufe durch in dem Gehäuse angeordnete Trennwände vollständig voneinander zu trennen sind.

Von besonders großem Vorteil ist es, daß die Ansaugöffnungen direkt dem Doppellüfterrad gegenüberliegen. Hierdurch wird nicht nur eine äußerst wirkungsvolle Ansaugung der Kühlluft erreicht, sondern es ist insbesondere auch sichergestellt, daß keine Verunreinigung sowohl in den Motor als auch in das Getriebe gelangt, die bei der Arbeit mit dem Handwerkzeug entsteht, da die Ansaugöffnungen hinreichend weit von dem Werkzeug entfernt sind. So wird beispielsweise im Falle eines Bohrhammers oder einer Schlagbohrmaschine wirkungsvoll die Ansaugung von Staub, Spänen u.dgl. verhindert, die beim Bohren entstehen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine teilweise weggebrochene und geschnittene Darstellung eines Gehäuses eines erfindungsgemäßen Handwerkzeugs;
- Fig. 2: die Seitenansicht eines Gehäuses eines erfindungsgemäßen Handwerkzeugs;
- Fig. 3: eine Schnittdarstellung entlang der Linie III-III der Fig. 1;
- Fig. 4: eine Schnittdarstellung entlang der Linie IV-IV der Fig. 1;
- Fig. 5: eine Schnittdarstellung entlang der Linie V-V der Fig. 1 und
- Fig. 6: Seitenansichten eines Doppellüfterrads sowie schematisch den durch das Doppellüfterrad erzeugten Luftstrom.

Ein Ausführungsbeispiel eines Handwerkzeugs ist in den Figuren exemplarisch in Form eines Bohrhammers dargestellt. Es versteht sich, daß die Erfindung jedoch nicht auf einen Bohrhammer beschränkt ist, sondern vielmehr bei jeglicher Art von Handwerkzeug eingesetzt werden kann.

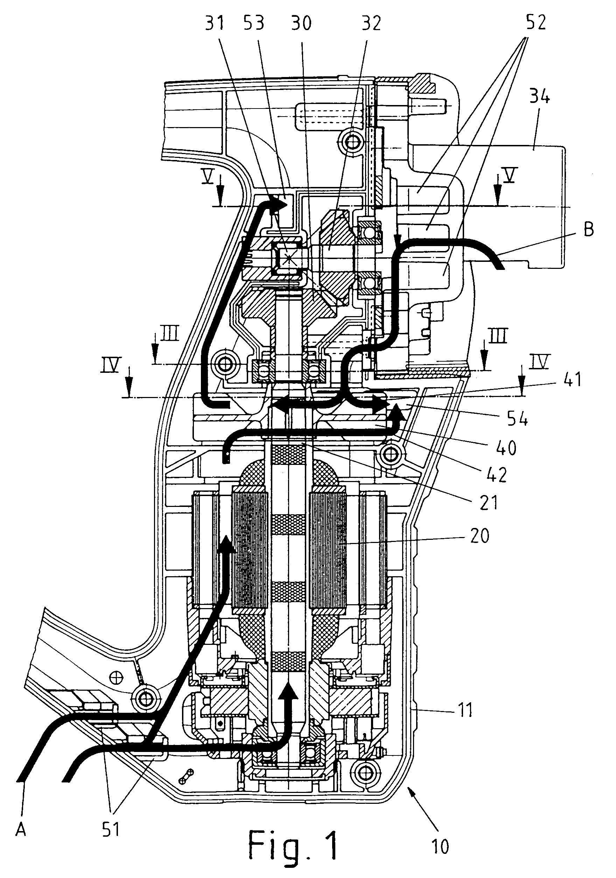

Wie aus Fig. 1 hervorgeht, umfaßt ein Bohrhammer 10 ein Gehäuse 11, in dem ein Motor 20 sowie ein diesem nachgeschaltetes Getriebe 30 angeordnet sind. Sowohl der Motor 20 als auch das Getriebe 30 erzeugen beim Betrieb des Bohrhammers 10 Wärme, die abgeleitet werden muß, um eine Überlastung des Motors und/oder des Getriebes, insbesondere eine Überlastung der Motor- und/oder Getriebelager und weiterer Gleitstellen, die beispielsweise durch einen aufgrund der Wärme erzeugten Schmierfilmabriss entstehen kann, zu vermeiden.

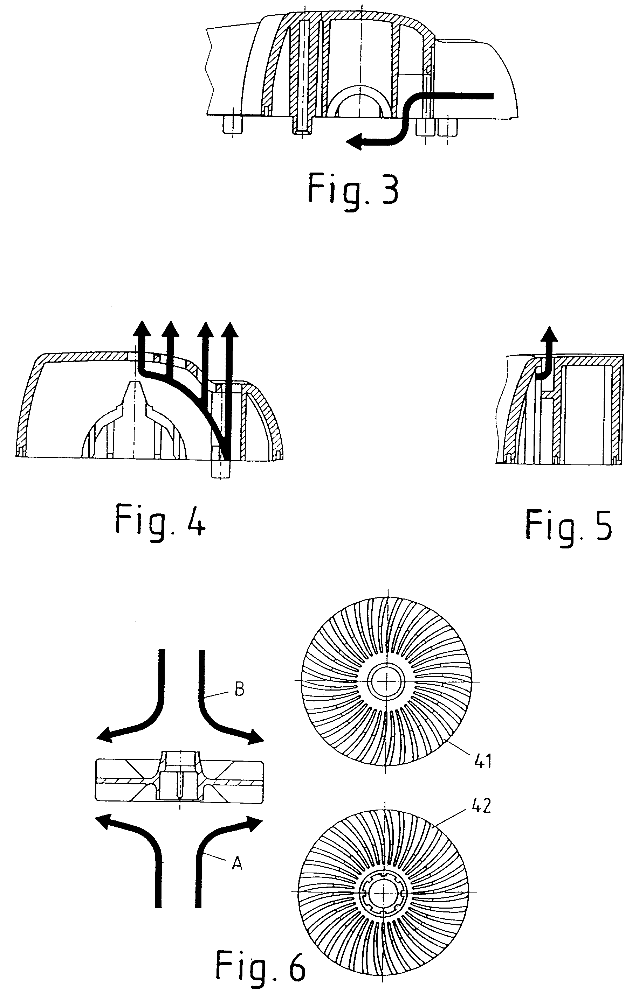

Zwischen dem Motor 20 und dem Getriebe 30 ist ein Doppellüfterrad 40 angeordnet, welches insbesondere einstückig miteinander verbundene Lüfterräder 41, 42 umfaßt (vergl. Fig. 6). Dieses Doppellüfterrad 40 wird durch die Ausgangswelle 21 des Motors in Rotation versetzt und erzeugt durch einen Kühlluftstrom, wie er schematisch in Fig. 6 anhand der Pfeile A für den motorseitigen Luftstrom und B für den getriebeseitigen Luftstrom dargestellt ist.

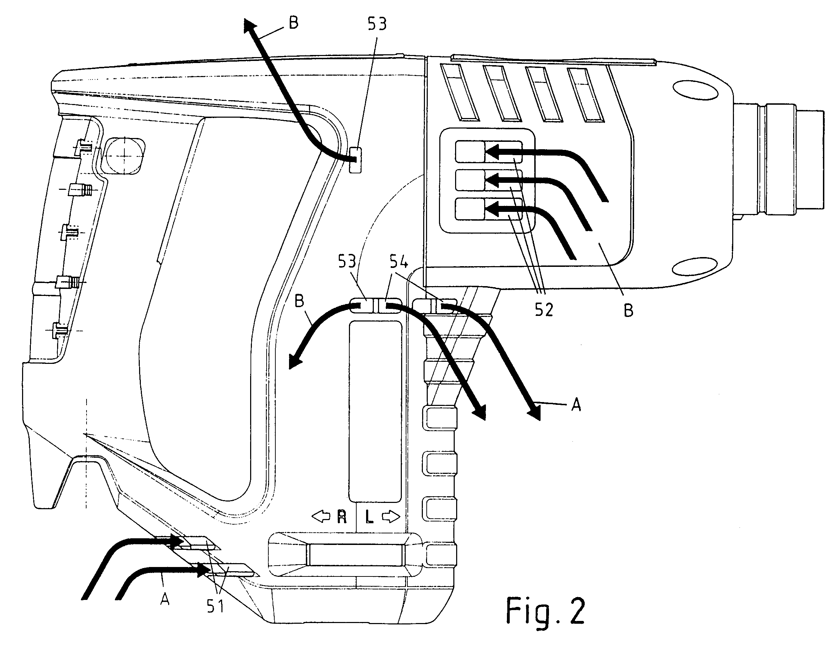

Wie aus Fig. 1 und 2 hervorgeht, sind in dem Gehäuse 11 Ansaugöffnungen 51 zur Ansaugung des zur Motorkühlung verwendeten Kühlluftstromes A sowie Ansaugöffönungen 52 zur Ansaugung des zur Getriebekühlung verwendeten Kühlluftstromes B vorgesehen. Des weiteren sind in dem Gehäuse Ausblasöffnungen 53, 54 vorgesehen, durch die jeweils der zur Motorkühlung verwendete Kühlluftstrom A und der zur Getriebekühlung verwendete Kühlluftstrom B ausgeblasen werden.

Die Kühlluftführung in dem Gehäuse 11 ist insbesondere in den Fig. 1 bis 5 veranschaulicht. Wie aus Fig. 1 hervorgeht, erzeugt das dem Motor 20 zugewandte Lüfterrad 42 den Kühlluftstrom A, der nach Ansaugen durch die Öffnungen 51 über den Motor 20 geführt wird und sodann durch die Ausblasöffnung 54 wieder ausgeblasen wird.

Das dem Getriebe 30 zugewandte Lüfterrad 41 des Doppellüfters 40 erzeugt den Kühlluftstrom B, der durch die Ansaugöffnung 52 angesaugt, über das Getriebe 30 geleitet und durch die Ausblasöffnung 53 wieder ausgeblasen wird.

Wie aus Fig. 1, 3 und 5 zu ersehen ist, ist der zweite Luftkanal so angeordnet, daß der Kühlluftstrom B darüber hinaus an einem die Lager aufnehmenden, gut wärmeleitenden, vorzugsweise aus Aluminium bestehenden Aufnahmeflansch 34 vorbeigeführt wird und auf wenigstens ein Lager 31 einer Getriebewelle 32 gerichtet ist, wodurch eine besonders effektive Kühlung dieses Getriebewellenlagers 31 erzielt wird.

Besonders vorteilhaft ist es, wenn der erste Lüftungskanal von dem zweiten Lüftungskanal durch in dem Gehäuse abgetrennte Trennwände (nicht dargestellt) vollständig getrennt ist, so daß eine Vermischung der beiden, gewöhnlich unterschiedliche Temperaturen aufweisenden Kühlluftströme und hierdurch eine Angleichung der beiden Kühlluftströme auf eine Mischungstemperatur verhindert wird.

Der große Vorteil oben beschriebenen Handwerkzeugs besteht darin, daß mit einem einzigen Doppellüfter 40 zwei getrennte Kühlluftkreisläufe in dem Gehäuse 11 zur getrennten Kühlung von Motor 20 und Getriebe 30 auf einfache und kostengünstige Weise ermöglicht wird.

## Patentansprüche

1. Handwerkzeug mit einem Gehäuse (11), in dem ein Motor (20), ein diesem nachgeordnetes Getriebe (30) und ein Lüftermittel angeordnet sind, wobei das Lüftermittel Kühlluft durch wenigstens eine Ansaugöffnung (51, 52) in dem Gehäuse (11) ansaugt, über Motor (20) und Getriebe (30) leitet und über wenigstens eine Ausblasöffnung (53, 54) in dem Gehäuse (11) wieder ausbläst, **dadurch gekennzeichnet,** daß das Lüftermittel wenigstens zwei Teillüftermittel umfaßt, die jeweils über getrennte Luftkanäle wenigstens den Motor (20) und das Getriebe (30) getrennt und unabhängig voneinander kühlen.

2. Handwerkzeug nach Anspruch 1, dadurch gekennzeichnet, daß das Lüftermittel ein Doppellüfterrad (40) ist, dessen beide Teillüftermittel jeweils ein dem Getriebe (30) und dem Motor (20) zugewandtes Lüfterrad (41, 42) sind.

3. Handwerkzeug nach Anspruch 2, dadurch gekennzeichnet, daß das Doppellüfterrad (40) zwischen dem Motor (20) und dem Getriebe (30) angeordnet und von der Motorwelle (21) angetrieben wird.

4. Handwerkzeug nach Anspruch 2 oder 3, dadurch gekennzeichnet, daß zur getrennten Kühlung von Motor (20) und Getriebe (30) in dem Gehäuse (11) jeweils getrennte Ansaug- und Ausblasöffnungen (51, 52; 53, 54) angeordnet sind.

5. Handwerkzeug nach einem der Ansprüche 2 bis 4, dadurch gekennzeichnet, daß ein zur Motorkühlung vorgesehener erster Luftkanal über den Motor (20) und ein zur Getriebekühlung vorgesehener zweiter Luftkanal über das Getriebe (30) führt.

6. Handwerkzeug nach Anspruch 5, dadurch gekennzeichnet, daR der zweite Luftkanal so angeordnet ist, daß der Kühlluftstrom (B) an wenigstens einem die Lager aufnehmenden, gut wärmeleitenden, vorzugsweise aus Metall bestehenden Aufnahmeflansch (34) vorbeigeführt wird und auf wenigstens ein Lager (31) der Getriebewelle (32) gerichtet ist.

7. Handwerkzeug nach Anspruch 5 oder 6, dadurch gekennzeichnet, daß der erste Luftkanal von dem Zweiten Luftkanal durch in dem Gehäuse (11) angeordnete Trennwände vollständig getrennt ist.

## Claims

1. A hand tool with a housing (11) in which a motor (20), a gearing (30) arranged downstream thereof and a ventilation means are arranged, wherein the ventilation means draws in cooling air through at least one suction opening (51, 52) in the housing (11), conveys it over the motor (20) and the gearing (30) and blows it out again by way of at least one discharge opening (53, 54) in the housing (11), **characterized in that** the ventilation means comprises at least two partial ventilation means which each cool at least the motor (20) and the gearing (30) separately and independently of each other by way of separate air ducts.

2. A hand tool according to Claim 1, **characterized in that** the ventilation means is a double fan wheel (40), the two partial ventilation means of which are each one fan wheel (41, 42) facing the gearing (30) and the motor (20).

3. A hand tool according to Claim 2, **characterized in that** the double fan wheel (40) is arranged between the motor (20) and the gearing (30) and is driven by the motor shaft (21).

4. A hand tool according to Claim 2 or 3, **characterized in that** separate suction and discharge openings (51, 52; 53, 54) are arranged in each case in the housing (11) in order to cool the motor (20) and the gearing (30) separately.

5. A hand tool according to one of Claims 2 to 4, **characterized in that** a first air duct provided for cooling the motor leads over the motor (20) and a second air duct provided for cooling the gearing leads over the gearing (30).

6. A hand tool according to Claim 5, **characterized in that** the second air duct is arranged in such a way that the cooling-air flow (B) is conveyed past at least one receiving flange (34) having good thermal conductivity, receiving the bearings and preferably consisting of metal, and is directed towards at least one bearing (31) of the gearing shaft (32).

7. A hand tool according to Claim 5 or 6, **characterized in that** the first air duct is completely separated from the second air duct by partition walls arranged in the housing (11).

## Revendications

1. Outil à main comprenant un boîtier (11) dans lequel est monté un moteur (20) suivi d'une transmission (30), ainsi qu'un dispositif de ventilation qui aspire de l'air frais à travers au moins une ouverture d'aspiration (51, 52) prévue dans le boîtier (11), le fait passer sur le moteur (20) et sur la transmission (30) et l'évacue à travers au moins une ouverture de sortie (53, 54) prévue dans le boîtier (11),
caractérisé en ce que
le dispositif de ventilation est divisé en au moins deux éléments de ventilation dont chacun refroidit séparément et indépendamment de l'autre, au moins le moteur (20) et la transmission (30) par l'intermédiaire de canaux de ventilations séparés.

2. Outil à main selon la revendication 1,
caractérisé en ce que
le dispositif de ventilation est une double turbine de ventilation (40) les deux éléments de ventilation étant constitués chacun par la turbine (41, 42) faisant face respectivement à la transmission (30) et au moteur (20).

3. Outil à main selon la revendication 2,
caractérisé en ce que
la double tubulure de ventilation (40) est montée entre le moteur (20) et la transmission (30) et est entraînée par l'arbre (21) du moteur.

4. Outil à main selon la revendication 2 ou 3,
caractérisé en ce que
pour refroidir séparément le moteur (20) et la transmission (30) il est prévu dans le boîtier (11) des ouvertures d'aspiration séparées et des ouvertures d'évacuation séparées, respectivement (51, 52 ; 53, 54).

5. Outil à main selon une des revendications 2 à 4,
caractérisé en ce qu'
un premier canal d'air passe sur le moteur (20) pour le refroidir et un second canal d'air passe sur la transmission (30) pour la refroidir.

6. Outil à main selon la revendication 5,
caractérisé en ce que
le second canal d'air est disposé de manière que le courant d'air frais (B) passe d'abord sur au moins une bride (34) servant de logement aux paliers, bonne conductrice de la chaleur et faite de préférence en métal, puis le courant (B) est dirigé sur au moins un palier (31) de l'arbre de transmission (32).

7. Outil à main selon les revendication 5 ou 6,
caractérisé en ce que
le premier canal d'air est complètement séparé du deuxième canal d'air par des cloisons de séparation disposées dans le boîtier (11).
